# EUROPÄISCHE PATENTSCHRIFT

(11) **EP 1 118 796 B1**
(45) Veröffentlichungstag und Bekanntmachung des Hinweises auf die Patenterteilung: **14.07.2004**
(21) Anmeldenummer: 01200196.2
(22) Anmeldetag: 19.01.2001
(51) Int. Cl.: F16G 11/04, F16G 11/12

(54) **Seilzuggerät mit Durchlaufbetrieb**
Traction device for passing-through cable
Appareil de traction continue en ligne pour cable

(30) Priorität: 21.01.2000 IT BZ200003
(43) Veröffentlichungstag der Anmeldung: 25.07.2001
(73) Patentinhaber: Czaloun, Hans Günter, 39040 Castelrotto (BZ) (IT)
(72) Erfinder: Czaloun, Hans Günter, 39040 Castelrotto (BZ) (IT)
(74) Vertreter: Faraggiana, Vittorio, Dr. Ing.

(56) Entgegenhaltungen:
- EP-A- 1 020 659
- FR-A- 1 224 778
- FR-A- 2 085 320
- GB-A- 1 133 450

## Beschreibung

Die vorliegende Erfindung betrifft ein Seilzuggerät mit Durchlaufbetrieb, gemäß dem Oberbegriff des Anspruchs 1, bei dem ein Seil mit einer automatisch dem Seilzug angepassten Anpresskraft zwischen zwei Raupen eingeklemmt und von mindestens einer der Raupen durch Haftreibung mitgenommen wird.

Es ist eine Reihe von Geräten bekannt, die ein Seil im Durchlaufbetrieb ziehen, wobei man im wesentlichen zwischen alternierend und kontinuierlich arbeitenden Geräten unterscheidet.

Weit verbreitet sind unter anderem Systeme, bei denen das Seil von periodisch schließenden Klemmbacken erfasst und dabei in einer alternierenden Bewegung weiterbewegt wird.

Bei kontinuierlich arbeitenden Systemen wird das Seil üblicherweise vom Umfang einer rotierenden Trommel oder Scheibe durch Reibungsschluss weiterbefördert. Bei den meisten dieser Geräte wird die Haftung des Seiles auf der Antriebsscheibe im wesentlichen durch die Umschlingung der Treibscheibe erreicht, wobei entsprechend dem Gesetz von Eytelwein auch im nicht ziehenden Seiltrum permanent eine gewisse Vorspannung erforderlich ist. Ein Beispiel für ein Triebsystem dieser Art stellt der seit dem Altertum bekannte Spill dar.

Es sind auch eine Reihe von Geraten bekannt, die im weitesten Sinn als Weiterentwicklung des Spillsystems angesehen werden können und bei denen jedoch die zur Funktion notwendige Vorspannung am Eingang der Treibscheibe durch ein Anpressen des Seiles an die Treibscheibe erzeugt wird, wodurch die Notwendigkeit einer Vorspannung durch äußere Kräfte entfällt.

Die Umschlingung der Treibscheibe stellt grundsätzlich eine einfache und wirksame Methode dar, um ein Seil zu ziehen, setzt aber dort Grenzen, wo die Umschlingung der Treibscheibe schwierig ist oder die Geräte durch die notwendig große Treibscheibe zu unhandlich werden.

Es wurden daher auch Geräte entwickelt, bei denen die Mitnahme des Seiles durch direkte Anpressung an eine Treibscheibe, also ohne Umschlingung derselben arbeitet. Diese konnten sich aber im wesentlichen nicht durchsetzen, weil die zur Mitnahme des Seiles notwendigen hohen Anpresskräfte über Rollen punktformig übertragen werden müssen, was zu unzulässig hohem Seilverschleiß bzw. zu einem erhöhten Rollwiderstand führen kann.

Der vorliegenden Erfindung liegt die Aufgabe zugrunde, die Nachteile der Geräte bekannter Art zu beseitigen und ein Seilzuggerät mit Durchlaufbetrieb mit direkter Anpressung des Seiles vorzuschlagen, bei dem an Stelle von Antriebsscheiben bzw. Anpressrollen Raupenlaufwerke als Antriebs- und Druckelemente verwendet werden. Dadurch erfolgt die Pressung auf einer durchgehenden längeren Fläche, so dass Seilverschleiß und Rollwiderstand gegenüber bekannten Systemen entscheidend reduziert werden.

Ferner wird dabei das Seil im Klemmbereich gerade geführt, was gegenüber einem um eine Treibscheibe gekrümmten Seil weitere Entwicklungsmöglichkeiten bietet.

Insbesondere besteht ein wesentlicher Vorteil der geraden Seilführung darin, dass die Vorrichtung zur Erzeugung der Anpresskraft als Funktion der Seilkraft auf einfache Weise durch ein Scharniersystem mit zwei schräggestellten Scharnierbolzen realisiert werden kann, wodurch unter anderem ein Aufsetzen des Gerätes auf einem gespannten Seil ermöglicht wird.

Das erfindungsgemäße Gerät sieht unter anderem vor, dass das Seil zwischen zwei Raupenlaufwerken geklemmt und von mindestens einem der Laufwerke angetrieben wird, wobei eine dem Seilzug proportionale Anpresskraft dadurch erzielt wird, dass die Raupenlaufwerke durch ein Scharniersystem mit zwei schräggestellten Scharnierbolzen zusammengehalten werden.

Der Antrieb kann dabei in einer an sich bekannter Art und Weise manuell oder motorisch erfolgen.

Die Erfindung ist definiert durch den Anspruch 1.

In den beigefügten Zeichnungen sind beispielhaft mehrere Ausführungsformen der vorliegenden Erfindung dargestellt. Es zeigen:
- Figur 1: einen Längsschnitt durch ein erfindungsgemäßes Gerät, bei dem der Antrieb des Seiles a nur über ein oberes Raupenlaufwerk erfolgt, während das zweitem untere Laufwerk c nicht angetrieben ist und nur die Aufgabe hat, den zur Mitnahme erforderlichen Anpressdruck A über rollende Reibung aufzunehmen, wobei beide Raupenlaufwerke in Form von Kettenlaufwerken ausgeführt sind,
- Figur 2: einen Längsschnitt durch ein erfindungsgemäßes Gerät, bei dem sowohl das obere als auch das untere Raupenlaufwerk angetrieben sind,
- Figur 3: einen Querschnitt durch das Gerät aus Figur 1,
- Figur 4: einen Querschnitt durch ein Gerät, bei dem beide Raupen b angetrieben sind und die Anpressung der Raupe auf das Seil in einer anderen Weise erfolgt als bei den übrigen Beispielen,
- Figur 5: unterscheidet sich von den oben erwahnten Ausführungsformen dadurch, dass zur Realisierung der Raupenlaufwerke nicht Ketten, sondern einteilige, endlose Ringe aus armiertem, gummiartigem Material verwendet werden, und außerdem dadurch, dass die schrägen Scharnierbolzen g nicht symmetrisch, sondern einseitig zur Seilachse angeordnet sind.

Die angeführten, unterschiedlichen Merkmale in der Ausführung können selbstverständlich auch in einer anderen Kombination zur Anwendung kommen.

Die erfindungsgemäßen Geräte besitzen ein oberes Gehäuse h und ein unteres Gehäuse i, die durch zwei um den Winkel α schräggestellte Scharnierbolzen g so mit einander verbunden sind, dass die Gehäuse gegeneinander auch axial etwas verschiebbar sind.

Eines der Gehause i wird über eine Öse k festgehalten, während das zweite durch Reibungsschluss mit dem Seil durch die Seilkraft T solange verschoben wird bis die wirkenden Kräfte A und T im Gleichgewicht sind. Das System erzeugt somit eine Anpresskraft A. die zum Seilzug T proportional ist, sodass bei richtiger Auslegung der Teile ein Durchrutschen des Seiles a unmöglich ist.

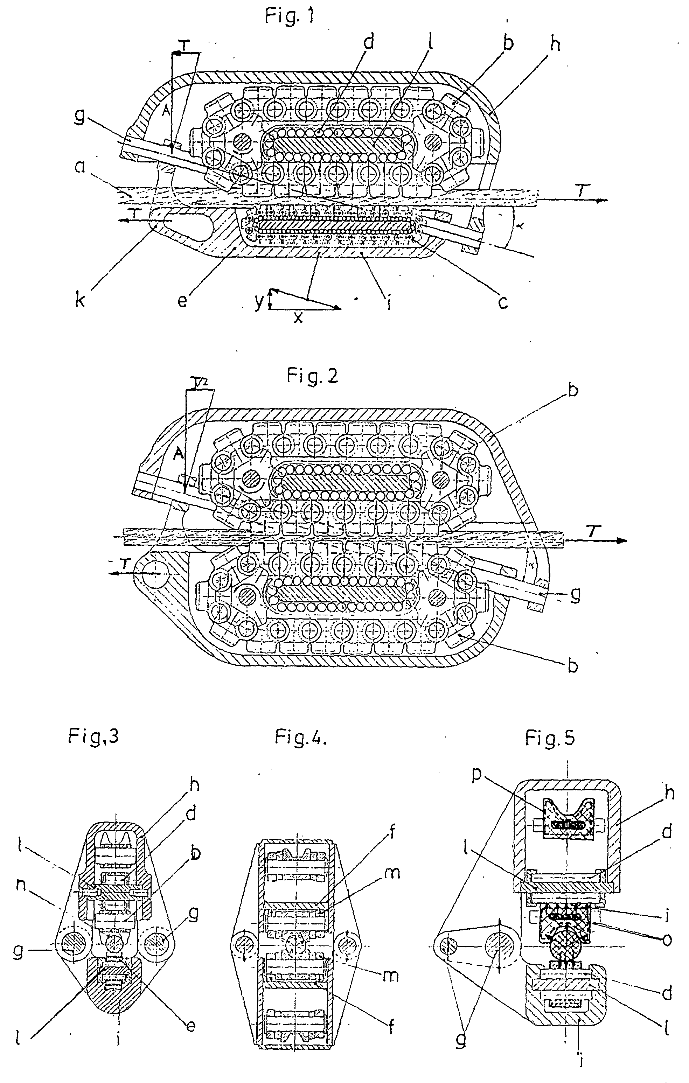

Zum Einlegen des Seiles kann bei den Ausführungsformen nach Figur 3 und 4 ein Scharnierbolzen herausgezogen werden, wodurch sich das obere Gehause gegenüber dem unteren System aufklappen lässt.

In Fallen, wo die Notwendigkeit im Vordergrund steht, dass des Klemmbereich des Seiles frei zugänglich sein soll, kann die Lösung nach Figur 5 zur Anwendung kommen, d. h. die einseitige Anordnung beider Scharnierbolzen g.

Die von den Raupenlaufwerken auf das Seil ausgeübte Querkraft A muss über rollende Reibung in das jeweilige Gehäuse h bzw. i übertragen werden.

Bei den in Figur 1, 2, 3 und 5 dargestellten Ausführungen erfolgt die Aufnahme der Querkraft A und die Übertragung derselben auf eine am Gehäuse fest liegenden Führungsbahn 1 durch die Rollenschuhe d bzw. e. Diese bestehen in einer an sich bekannten Art und Weise aus einer Reihe von Rollen, die in einem Kanal frei umlaufen und im Berührungsbereich mit dem Rücken der Raupe die Querkraft A aufnehmen.

In dem in Figur 4 dargestellten Beispiel sind die Raupenlaufwerke als Rollenketten ausgebildet, welche die Querkraft A über die auf den Kettenbolzen gelagerten Rollen m auf die am Gehause fest liegenden Führungsbahnen f übertragen.

Die angetriebenen Raupenlaufwerke b besitzen vorzugsweise eine keilförmige Seilrille n, um bei gegebenem Anpressdruck A eine höhere Haftkraft gegenüber dem Seil zu erzielen.

Bei der in Figur 5 beispielhaft dargestellten Ausführungsform werden bei den Raupenlaufwerken j im Gegensatz zu den übrigen Ausführungsbeispielen anstelle von Ketten endlose, flexible Raupen aus gummiähnlichem Material verwendet, die aufgrund der auftretenden Zug- und Querkräfte mit Zugsträngen n und biegesteifen Bügeln o armiert sind.

## Patentansprüche

1. Seilzuggerat mit Durchlaufbetrieb, **dadurch gekennzeichnet, dass** das Seil (a) zwischen einem unteren, fest verankerten Raupenlaufwerk (c) und einem oberen, verschieblich gelagerten Raupenlaufwerk (b) eingeklemmt und dabei von mindestens dem verschieblich gelagerten Raupenlaufwerk (b) durch Reibungsschluss mitgenommen wird, wobei die Mitnahme durch eine dem Seilzug T entsprechende Anpresskraft A auf das Seil dadurch erfolgt, dass das das Seil umgreifende Gehäuse (h und i) zweigeteilt ist, und die Gehäuseteile (h, i) durch eine scharnierartige Verbindung mit einer axialen Verschiebmöglichkeit (x) der beiden Gehäuseteile (h, i) zueinander verbunden sind, die aus zwei um den Winkel α schräggestellte Scharnierbolzen (g) besteht, was bei axialer Verschiebung (x) unter Wirkung des Seilzuges (T) eine Annäherung der darin gelagerten Raupenlaufwerke um den Weg (y) bewirkt.

2. Seilzuggerät nach Anspruch 1, **dadurch gekennzeichnet, dass** die Anpressung der Raupenlaufwerke auf das Seil durch Rollenschuhe (d, e) erfolgt, bei denen eine Reihe von frei in einem Kanal umlaufenden Rollen den Anpressdruck (A) vom Raupenlaufwerk auf eine am Gehäuse (h, i) festliegende Fuhrungsbahn (l) übertragen.

3. Seilzuggerät nach Anspruch 1, **dadurch gekennzeichnet, dass** die Anpressung der Raupenlaufwerke auf das Seil durch Rollen (m) erfolgt, die auf Kettenbolzen gelagert sind und die den Anpressdruck (A) auf den am Gehäuse (h, i) fest liegenden Führungsbahnen (f) übertragen.

4. Seilzuggerät nach Anspruch 1, **dadurch gekennzeichnet, dass** zur Realisierung der Raupenlaufwerke flexible, endlose Raupen aus gummiähnlichen Material verwendet werden, die zur Aufnahme der Zugkräfte mit Zugsträngen (n) und zur Aufnahme der Querkrafte mit biegesteifen Bügeln (o) armiert sind.

5. Seilzuggerät nach Anspruch 1, **dadurch gekennzeichnet, dass** zur Verbindung des oberen Gehäuses (h) und des unteren Gehauses (i) vorgesehene Scharniere mit schräggestelltem Scharnierbolzen (g) unsymmetrisch zur Seilachse nur auf einer Seite des Gerätes angeordnet sind, wodurch der Klemmbereich des Seiles frei zugänglich wird.

## Claims

1. A continuous traction device for passing-through cable, **characterised in that** the cable (a) is clamped between a lower caterpillar mechanism (c) which is fixedly anchored and an upper caterpillar mechanism (b) which is supported in a movable manner, said cable being thus dragged along by friction-coupling by at least the caterpillar mechanism (b) supported in a movable manner, dragging along taking place with a pressure force (A) on the cable corresponding to the cable pulling (T), **in that** the hollow body (h and i) embracing the cable is divided into two parts and that the hollow body parts (h, i) are connected with each other by a hinge connection with possibility of axial displacement (x) of both parts of the hollow body (h, i) consisting of two hinge pivots (g) inclined by an angle α, which upon an axial displacement (x) under the pulling (T) action, involves approaching by a distance (y) of the caterpillar mechanisms supported thereon.

2. A traction device for cable as claimed in claim 1, **characterised in that** pressure application by the caterpillar mechanisms on the cable takes place by means of roller runners (d, e), wherein a set of rollers freely rotating in a channel transmits the applied pressure (A) from the caterpillar mechanism to a guide track (l) integral with the hollow body (h, i).

3. A traction device for cable as claimed in claim 1, **characterised in that** pressure application by the caterpillar mechanisms on the cable takes place by means of rollers (m) that are supported on chain pivots and transmit the applied pressure (A) to the guide tracks (l) integral with the hollow body (h, i).

4. A traction device for cable as claimed in claim 1, **characterised in that** for obtaining the caterpillar mechanisms, flexible continuous caterpillars are used that are made of a rubber-like material and are reinforced by portions acting as tie-rods (n) to absorb tensile forces and by brackets (o) resisting to bending to absorb transverse forces.

5. A traction device for cable as claimed in claim 1, **characterised in that** the hinges provided for connection of the upper part (h) and lower part (i) are arranged so as to have pivot pins (g) obliquely disposed in an asymmetric manner relative to the cable axis on one side alone of the apparatus, so that the cable-clamping region becomes freely accessible.

## Revendications

1. Appareil de traction continue en ligne pour câble, **caractérisé en ce que** le câble (a) est serré entre un mécanisme à chenilles (c) inférieur ancré fixement et un mécanisme à chenilles (b) supérieur supporté de manière mobile et il est ainsi entraîné par accouplement à frottement par au moins le mécanisme à chenilles (b) supporté de manière mobile, l'entraînement ayant lieu avec une force de pression (A) sur le câble, correspondant au tirage (T) du câble, du fait que le corps creux (h et i) entourant le câble est divisé en deux parties et du fait que les parties du corps creux (h, i) sont reliées l'une à l'autre par une liaison sous forme de charnière avec possibilité de déplacement axial (x) des deux parties du corps creux (h, i) lequel se compose de deux axes de charnière (g) disposés obliquement selon un angle α, ce qui entraîne, lors d'un déplacement axial (x) sous l'action du tirage (T), un rapprochement selon un parcours (y) des mécanismes à chevilles supportés sur ceux-ci.

2. Appareil de traction pour câble, selon la revendication 1, **caractérisé en ce que** l'application de la pression des mécanismes à chevilles sur le câble a lieu par des patins à rouleaux (d, e), où une série de rouleaux, tournant librement dans un canal transmettent la pression appliquée (A) par le mécanisme à chevilles à une piste de guidage (l) solidaire du corps creux (h, i).

3. Appareil de traction pour câble, selon la revendication 1, **caractérisé en ce que** l'application de la pression des mécanismes à chevilles sur le câble a lieu par des rouleaux (m) qui sont supportés sur des pivots de chaîne et transmettent la pression appliquée (A) aux pistes de guidage (l) solidaires du corps creux (h, i).

4. Appareil de traction pour câble selon la revendication 1, **caractérisé en ce que** pour la réalisation des mécanismes à chenilles on emploie des chenilles flexibles continues réalisées en une matière type caoutchouc lesquelles sont renforcées par des portions faisant fonction d'entretoises (n) pour absorber les forces de traction et par des étriers (o) rigides à la flexion pour absorber les forces transversales.

5. Appareil de traction pour câble selon la revendication 1, **caractérisé en ce que** les charnières prévues pour la liaison de la partie supérieure (h) et de la partie inférieure (i) sont disposées de manière à avoir des axes de charnière (g) agencés obliquement de manière asymétrique par rapport à l'axe du câble sur un côté seulement de l'appareil, de sorte que la zone de serrage du câble devient librement accessible.
